(19) Europäisches Patentamt
European Patent Office
Office européen des brevets

(11) **EP 3 336 488 B1**

(12) **EUROPEAN PATENT SPECIFICATION**

(45) Date of publication and mention
of the grant of the patent:
**24.03.2021 Bulletin 2021/12**

(51) Int Cl.:
***G01C 21/16*** *(2006.01)*   ***G01C 25/00*** *(2006.01)*
***G01C 21/12*** *(2006.01)*

(21) Application number: **17208098.8**

(22) Date of filing: **18.12.2017**

(54) **METHOD OF VERIFICATION OF THE INSTALLATION OF AN APPARATUS MOUNTED ON BOARD A VEHICLE, AND RELATED SYSTEM**

VERFAHREN ZUR ÜBERPRÜFUNG DER INSTALLATION EINER AN EINEM FAHRZEUG ANGESTELLTEN VORRICHTUNG UND ZUGEHÖRIGES SYSTEM

PROCÉDÉ DE VÉRIFICATION DE L'INSTALLATION D'UN APPAREIL MONTÉ À BORD D'UN VÉHICULE, ET SYSTÈME ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2016 IT 201600127830**

(43) Date of publication of application:
**20.06.2018 Bulletin 2018/25**

(73) Proprietor: **Marelli Europe S.p.A.**
**20011 Corbetta (MI) (IT)**

(72) Inventors:
• **DE TOMMASI, Claudio**
**I-10095 GRUGLIASCO (Torino) (IT)**
• **ASCHERO, Manuel**
**I-17031 ALBENGA (Savona) (IT)**

(74) Representative: **Deambrogi, Edgardo et al**
**Jacobacci & Partners S.p.A.**
**Corso Emilia 8**
**10152 Torino (IT)**

(56) References cited:
**EP-A1- 2 469 229    EP-A2- 1 443 307**

**Description**

The present invention relates in general to the installation and operation of apparatuses on board vehicles, in particular apparatuses or on-board systems including attitude (gyroscopes), motion (accelerometers) or positioning (satellite positioning) sensor means of the vehicle and/or communication means, provided for driving assistance.

More specifically, the invention relates to a method of verification of the installation of an apparatus such as a telematics unit mounted on board a vehicle, according to reclaim 1.

The invention also relates to a verification system of the installation of a telematics unit on board a vehicle, according to claim 9.

There are increasing numbers of vehicles that rely on the on board installation of detection and communication systems, here concisely referred to as telematics units, including, for example, inertial sensors, such as attitude or acceleration sensors, and/or signal receivers, such as receivers of signals emitted by satellite constellations of a geographic positioning system, in order to provide accurate indications of the location of the vehicle, the orientation of the vehicle in space and the displacement dynamics thereof. Such units not only contribute to the operation of on-board driving assistance systems, but are indispensable for the functionality of other auxiliary systems, including, to cite an example, surveillance and recording systems for vehicle movements used in anti-theft devices or devices, known as black boxes, for the detection of offences or dynamics of traffic accidents.

For this purpose, vehicles may integrate a telematics unit from the time of their manufacture. If a telematics unit is not provided at the time of vehicle's manufacture, it may be advantageously installed at a later date as an aftermarket installation.

Both in the first and, above all, in the second case, however, it is not easy to comply with the predetermined attitude constraints for each vehicle model, i.e. positioning and orientation, of the unit, due to the heterogeneity of the telematics units and vehicles, but also of the cost and time constraints that are significant in a proposed aftermarket installation.

It may, therefore, occur that the installation instructions are not respected and applied.

Disadvantageously, the multitude of functions that may be integrated into an on-board telematics unit often requires that the installation be carried out taking into account the final orientation (after assembly) with respect to the vehicle.

For example, a correct spatial orientation of the antenna of a geopositioning system ensures better reception performance. A telematics unit incorporating a DSRC (Dedicated Short Range Communications) antenna for short/medium range wireless communications requires a predetermined orientation of the antenna, for example an antenna facing the front of the vehicle, to ensure efficient communications with the road infrastructure which the vehicle approaches in driving conditions.

Furthermore, to ensure the correct operation of a telematics unit including inertial sensors (gyroscope, accelerometers), it is important that the installation is stable and integral with the vehicle. Excessive vibration, changes in orientation, spurious oscillations may corrupt the on-board functionality over which these sensors preside. These sensors may further require an installation in a specific orientation to ensure correct operation of the unit in the applications required thereto.

EP 1 443 307 discloses determining a mounting angle of a vehicle-mounted device based on an acceleration sensor, a gyroscopic sensor and a GPS receiver mounted in the vehicle-mounted device, and a comparator for comparing the determined mounting angle and a permissible range corresponding thereto. According to the teaching of EP 1 443 307, a mounting angle processor determines a sine value of a mounting angle in a pitch direction of the vehicle-mounted device by dividing a totalized and averaged value by acceleration of gravity, the totalized and averaged value being determined by totalizing and averaging acceleration detected by the acceleration sensor, and if the determined mounting angle is out of the permissible range, it is determined that the mounting angle is abnormal.

The object of the present invention is to facilitate the assembly of an apparatus, such as a telematics unit on board a vehicle, verifying its correct installation, so that it may be used effectively for the intended applications. More specifically, the object of the invention is to verify the correct and accurate installation of an apparatus, such as an on-board telematics unit including detection and communication systems so that such systems operate effectively by virtue of the correct positioning of the apparatus with respect to the vehicle.

A further object of the invention is to provide an automatic verification technique for the correct installation of an apparatus such as a telematics unit on board a vehicle, which requires simplicity of construction, minimum computational costs and reduced power consumption, favoring speed and accuracy of execution.

According to the present invention, such object is achieved by means of a method of verification of the installation of an apparatus mounted on board a vehicle, having the characteristics referred to in claim 1.

Particular embodiments are the subject of the dependent claims, the content of which is to be understood as an integral part of the present description.

A further subject of the invention is a verification system of the installation of an apparatus mounted on board a vehicle, having the characteristics referred to in claim 9.

In summary, the present invention is based on the principle of determining the correctness of the installation of an apparatus, such as a telematics unit on board a vehicle, according to the determination of the installation orientation of the aforesaid apparatus.

In the case of an apparatus equipped with an inertial sensor device, such as an attitude or movement sensor, for example, a triaxial accelerometer, as well as with a receiver for a geographical positioning system, such as a satellite positioning system, it is possible to determine the orientation of the apparatus with respect to a reference system of the vehicle and consequently verify the occurrence of possible oscillations and spurious vibrations of the attitude of the apparatus with respect to the vehicle in running conditions, indicative of a loose installation, i.e. the variation of orientation for comparison with a reference orientation, indicative of incorrect installation.

Further features and advantages of the invention will be described in greater detail in the following detailed description of one embodiment thereof, given by way of non-limiting example, with reference to the accompanying drawings wherein:

figure 1 is a schematic representation of a vehicle equipped with a telematics unit mounted in a predetermined position, wherein the main axes of a reference system centered on the vehicle are identified;
figure 2 is a block diagram of an on-board telematics unit according to the invention, provided to implement a calibration method in the context of the invention;
figure 3 is a diagram indicative of the notation used in the present description;
figure 4 is a flowchart of a calibration method implemented in the context of the present invention for carrying out a method for verifying the correct installation of a unit mounted on board a vehicle; and
figures 5 to 7 are flowcharts of alternative embodiments of a method for verifying the correct installation of a unit mounted on board a vehicle.

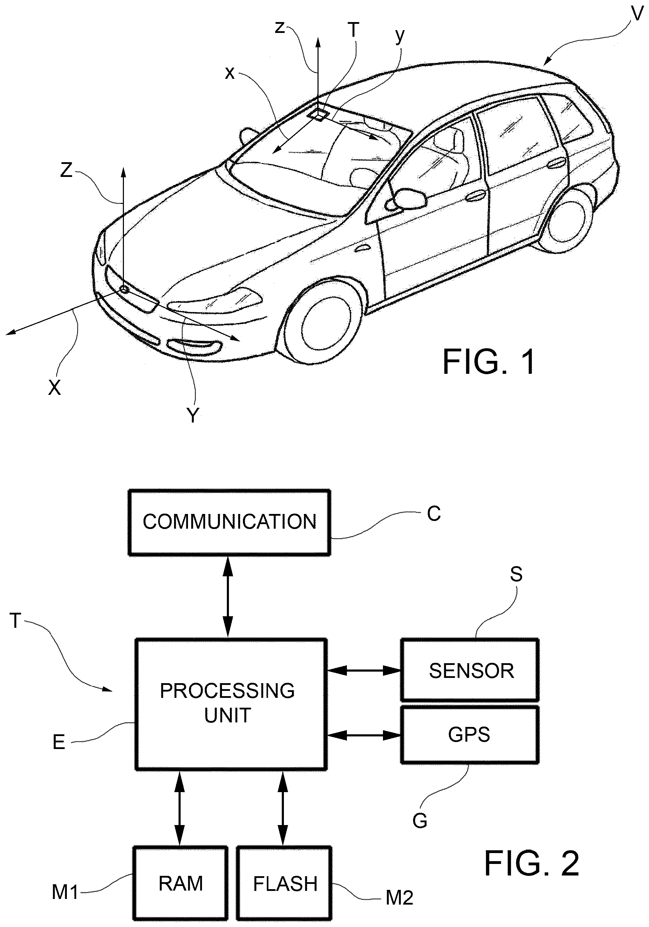

In figure 1, V indicates collectively a vehicle equipped with a telematics unit T provided to detect the dynamic conditions of the vehicle, in particular adapted for measuring the accelerations to which the vehicle is subjected during operation, according to the different driving conditions. In the figure, the principal axes of the vehicle are indicated at X, Y, Z, commonly identified as longitudinal, transverse and vertical axes, and with respect to which the vehicle movements are defined, for example the speeds, accelerations, and angles of inclination of the same in every driving condition. The X, Y, Z axes represent the vehicle reference system with respect to which the installation of the unit must be carried out so that it operates correctly and effectively in the execution of the requested functions.

In the embodiment of figure 1, a telematics unit mounted on the windshield of the vehicle in an inclined position with respect to the road surface is shown purely by way of example. Other mounting seats may be provided, for example on the dashboard, in the engine compartment in a horizontal position, resting on the battery box, or in the load compartment in a vertical position, supported on a side wall of the compartment. The local reference system of the telematics unit is indicated by the triple-axis x, y, z, commonly identified as the longitudinal, transverse and vertical axes of the unit.

The telematics unit T may be installed on board the vehicle at the time of its production and interfaced with an integrated on-board communication line, for example, the CAN bus, for transferring the measured data to other vehicle processing units. Alternatively, the unit is installed on board the vehicle after its production and connected to the other processing units through a dedicated communication line, since access to the CAN network would not be possible.

As indicated in detail in the block diagram of figure 2, the telematics unit T comprises an electronic processing unit E, to which a GPS receiver is coupled, indicated collectively at G, or an equivalent on-board sensor adapted to acquire reference data of the geographic position and the dynamics of the vehicle, the receiving antenna of which is positioned on the vehicle in an arbitrary manner, or in a predetermined position in relation to a motion sensor if the antenna is the object of the correct installation audit. To the electronic processing unit E a movement sensor device S is coupled, such as, for example, a triple-axis accelerometer device, mounted in an arbitrary position if it is itself the object of the correct installation audit, or mounted in a predetermined position in relation to the telematics unit if the latter is the object of the correct installation audit. The movement sensor device S is adapted to measure the linear and centripetal accelerations to which it is subjected (and therefore the unit, in the assumption that said coupling is integral) in the direct components according to the local axes of the device.

To the processing unit E, memory modules M1 and M2 are also associated, typically a random-access memory module M1 for temporary data storage and a flash memory module M2 for permanent data storage.

To the processing unit E a radio communication module C is also coupled, for example a bidirectional radiocommunication module according to the GSM, GPRS, EDGE, UMTS, LTE telecommunication protocols and the like, or a bidirectional radiocommunication module according to the communication protocols Bluetooth, WiFi, NFC and the like, if the processing unit E is associated with a personal mobile communication device such as the mobile phone of the driver of the vehicle.

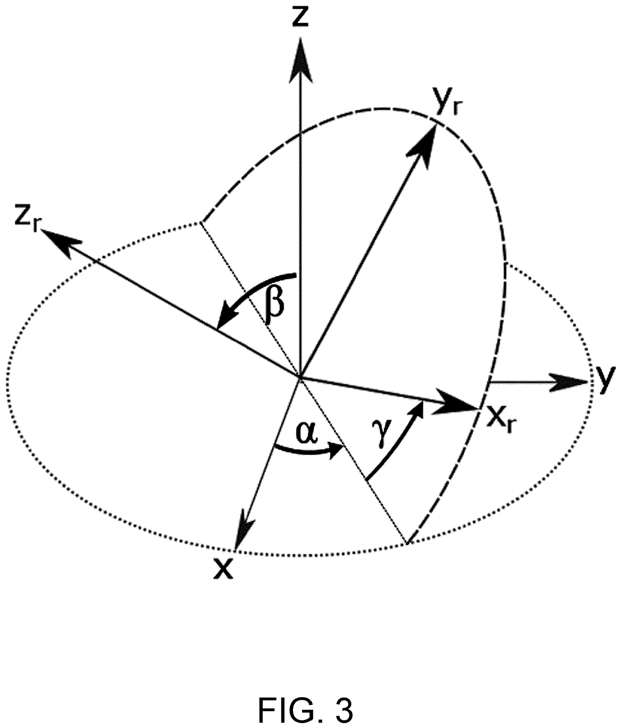

To define the oriented position of a telematics unit on board a vehicle, the definition of Euler angles of figure 3 is applied wherein at $\gamma$ is indicated a first rotation around the z axis of the telematics unit T, at $\beta$ is indicated a subsequent rotation around the new x axis of the telematics unit and at $\alpha$ is indicated a last rotation around the new z axis of the telematics unit.

The telematics unit T is arranged to determine its attitude relative to the positioning on the vehicle by means of the motion sensor S by applying a self-calibration method such as that described in the European patent application EP 2 469 229, and summarized below, for which instructions of an execution program are stored in the flash memory module M2.

In a self-calibration method as described in European patent application EP 2 469 229 and summarized hereinafter, the attitude of an apparatus installed on board a vehicle in an arbitrary position, and therefore referring to a coordinate system of the apparatus (local reference system), is determined by comparison with the vehicle attitude data referring to a vehicle coordinate system, by means of a coordinate conversion matrix.

The conversion matrix is calculated from the actual measurement data of the quantities indicative of the movement of the vehicle, obtained from the on-board apparatus, and from corresponding real reference measurement data of the vehicle dynamics, referring to the vehicle coordinate system, obtained from different calibration detector means, for example through the satellite positioning system integrated in the apparatus.

The coefficients of the conversion matrix are calculated by comparison to the aforementioned real measurement data, through a number of independent measurements of the quantities indicative of the movement of the vehicle equal to the number of columns in the matrix.

Preferably, the aforesaid calibration method uses real reference measurement data of the vehicle dynamics obtained by means of a GPS receiver, appropriately filtered to ensure the optimal dynamic measurement conditions and the accuracy of the signal received. Other sources of measurement data of vehicle dynamics may be considered as a reference as an alternative to the data of a GPS receiver or of a different positioning system, for example, angular speed sensors or differential odometer sensors integrated in the vehicle for autonomous measurement of the distances traveled through the rotation measurements of the vehicle wheels.

By means of this calibration method, the telematics unit installed on board the vehicle is able to recognize its position accurately in the vehicle's reference system.

More specifically, the processing unit E is a calculation unit which is provided for the acquisition of the acceleration data detected by the sensor device S of the telematics unit T in its reference system (x, y, z) and for comparison with the vehicle reference system (X, Y, Z) through a predetermined conversion matrix R.

The processing unit E is also provided for carrying out the calibration of the telematics unit T, or for determining the coefficients of the conversion matrix R, on at least one occasion after the installation of the device and, according to a preferred embodiment, to update these coefficients repeatedly according to a predetermined time frame, for example at periodic intervals, according to a regular predetermined timing or depending on the activation of the driving assistance system which makes use of the measured data. The calibration of the telematics unit includes two steps: the first step comprises a process of updating all the elements of the conversion matrix which may be implemented a predetermined number of times; the second step comprises an orthogonalization of the aforesaid matrix.

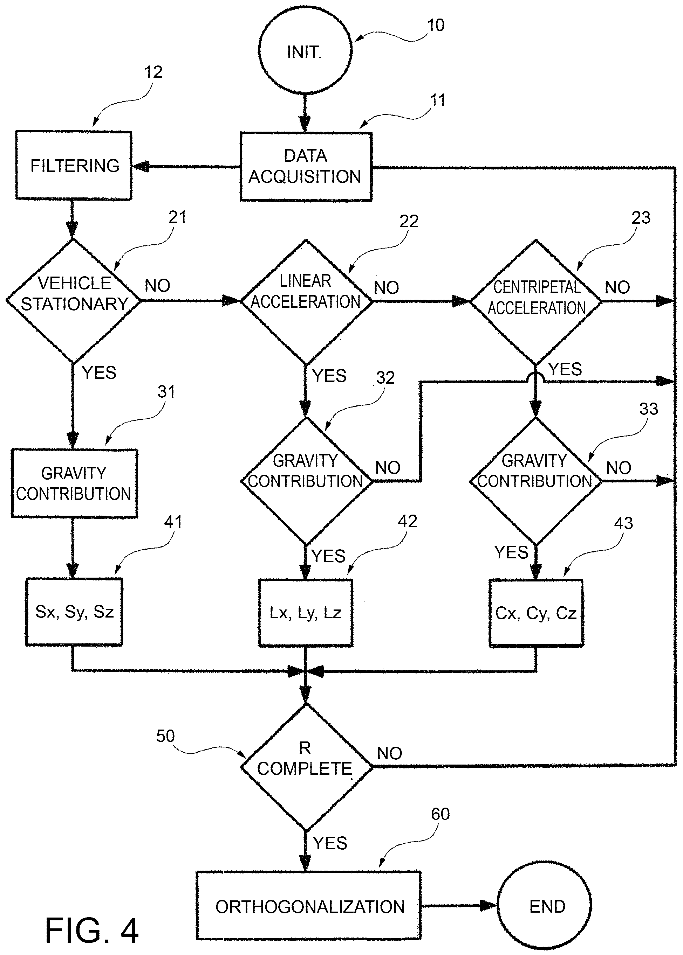

The calibration method is described in detail below with reference to the flow chart of figure 4.

After a preliminary initialization step 10, the processing unit E acquires at the step 11 data indicative of the vehicle dynamics from the GPS receiver G. Such data, typically the evolution of the vehicle position data over time, allow corresponding reference data for vehicle accelerations along the main axes X, Y, Z to be determined.

Using GPS data, the following dynamic vehicle conditions may be identified: (1) stationary vehicle, (2) vehicle braking or accelerating, without change of direction, (3) change of direction of vehicle moving at a constant speed, (4) other dynamic behavior, different from the preceding ones. The conditions (1), (2), (3) allow for the execution of the calibration method and the determination of the conversion matrix by combining the data measured by the accelerometer device and of the reference data derived from the positioning data, as will be reported in detail in the following description. The condition (4) does not allow for calibration and, in this case, the method is automatically suspended, waiting for new usable data.

The condition (1) of stationary vehicle may also be easily determined on the basis of the on-board accelerometer device data alone, by calculating the variance of the measured acceleration data and comparing it with a predetermined threshold, so as to speed up the calibration method. Alternatively, when the accelerometer device data are known in combination with the positioning data, the former cooperate to improve the determination of the condition of the stationary vehicle detected by the latter.

In effect, in terms of vehicle dynamics, the condition of stationary vehicle may be considered analogous to the condition wherein the vehicle is in constant and uniform motion. Therefore, the condition of the moving vehicle at constant speed and direction may also be used in the calibration method as equivalent to the condition (1), so as to increase the number of measurements available.

Because positioning data, such as GPS satellite positioning data, do not include acceleration data, preliminary processing is required to obtain information about the dynamics of the vehicle.

First, the positioning data is filtered to eliminate invalid data, that is, data acquired by the receiver G in conditions of uncertain or poor quality positioning. When the positioning is considered valid, the speed and direction of travel of the vehicle may be deduced from the positioning data.

The linear acceleration AccL may be determined by applying the known expression:

$$\mathrm{Acc_L} = (V(t) - V(t\text{-} \tau)) / \tau$$

where $\tau$ is the GPS sampling period.

The centripetal acceleration $\mathrm{Acc_c}$ is determined from the angular speed (derived from the direction of travel) and the travel speed, according to the expression:

$$\mathrm{Acc_c} = V * \omega \qquad [m/s^2]$$

where V is the linear speed, expressed in [m/s] and $\omega$ is the angular speed, expressed in [rad/s], the latter derived from the direction of travel ($\theta$) provided by the receiver G according to the relationship:

$$\omega = (\theta(t) - \theta(t - \tau)) / \tau$$

where $\tau$ is the GPS sampling period.

Simultaneously with the acquisition of the positioning data, the processing unit E acquires at step 11 data indicative of the vehicle dynamics from the accelerometer device S, referring to the local axes x, y, z.

The acquisition of the real acceleration data from the on-board accelerometer device is significantly faster than the acquisition of the reference acceleration data, of about two orders of magnitude (for example the acquisition of data from the accelerometer device takes place every 2.5 ms while the positioning data are available every 200 ms). For this reason, and since consequently the calibration process may not take place at a frequency higher than the update frequency of the positioning data, the data of the accelerometer device are processed in advance. Advantageously, taking advantage of the sampling rate of 2.5 ms, it is possible to collect four samples every 10 ms and then to average the value and submit the result to a noise filter, at step 12.

Once the acceleration measurement data are acquired from the on-board accelerometer device and the reference acceleration data are calculated from the positioning data, the processing unit E performs the operations for calculating the conversion matrix coefficients.

The current dynamic condition of the vehicle is verified by comparing the positioning data and the reference acceleration data derived therefrom with predetermined threshold values. Specifically, the condition (1) of stationary vehicle is determined (step 21) if the detected speed is lower than a first speed threshold and the linear acceleration is, in absolute value, lower than a first linear acceleration threshold.

The linear acceleration condition (2) is determined (step 22) if the detected speed is higher than a second speed threshold, the linear acceleration is, in absolute value, higher than a second linear acceleration threshold, and the absolute value ratio between the centripetal acceleration and the linear acceleration is lower than a comparison threshold value.

The centripetal acceleration condition (3) is determined (step 23) if the detected velocity is higher than a third speed threshold, the centripetal acceleration is, in absolute value, higher than a first centripetal acceleration threshold, and the absolute value ratio between the linear acceleration and the centripetal acceleration is lower than said comparison threshold value.

It should be noted that for determining the dynamic conditions of linear and centripetal acceleration of the vehicle, it is necessary that the latter rotate at a speed higher than a respective threshold, as otherwise the speed and direction measurements made with the aid of the GPS receiver would not be reliable.

If the condition (1) of the stationary vehicle is recognized at the threshold comparison step 21, the method proceeds to step 31, wherein the contribution of gravity acceleration on the accelerometer device is determined. This step is very important, since the contribution of gravity acceleration must be known for the calibration calculation in the linear and centripetal acceleration conditions. It is therefore necessary to acquire a predetermined minimum number of samples of actual measurement data when the vehicle is stationary, for example 50, in order to also perform the calibrations in accelerating vehicle conditions.

Once the contribution of gravity acceleration has been calculated, according to the current dynamic condition, i.e. if the result of the verification of the dynamic conditions of the vehicle at step 22 is the recognition of a linear acceleration (or deceleration) condition or if the result of the verification of the dynamic conditions of the vehicle in step 23 is the recognition of a centripetal acceleration (or deceleration) condition, the processing unit E updates the elements of the conversion matrix correlated thereto after having verified (step 32 and 33, respectively) if the calculation of the contribution of gravity acceleration on the accelerometer device has been completed.

The structure of the real conversion matrix R is shown below:

$$\begin{bmatrix} Lx & Cx & Sx \\ Ly & Cy & Sy \\ Lz & Cz & Sz \end{bmatrix}$$

with a notation of the elements that makes it possible to identify each thereof according to the dynamic calibration condition during which it is determined (L = linear acceleration, C = centripetal acceleration, S = static or stationary vehicle condition) and according to the axis of the local reference system (x, y, z) to which it refers.

For example, Lx is the element of the matrix determined in the dynamic condition of linear acceleration of the vehicle and relative to the measurement of the accelerometer device along the x axis.

The conversion expression between the attitude vector ($X_a$, $Y_a$, $Z_a$) measured in the local reference system of the telematics unit (x, y, z) and the attitude vector ($X_a$, $Y_a$, $Z_a$) in the reference system of the vehicle (X, Y, Z) is as follows:

$$\begin{bmatrix} X_a \\ Y_a \\ Z_a \end{bmatrix} = \begin{bmatrix} Lx & Cx & Sx \\ Ly & Cy & Sy \\ Lz & Cz & Sz \end{bmatrix} \begin{bmatrix} x_a \\ y_a \\ z_a \end{bmatrix}$$

In the dynamic condition of a stationary vehicle, in step 41 the processing unit updates the elements of the third column of the conversion matrix *Sx, Sy, Sz* as a function of the mean values of the real measurement data *Acc_x, Acc_y, Acc_z* of the accelerometer device, and the values of the elements of the matrix calculated from the previous iteration, according to the relationships:

$$Sx = (Sx * n_{step} + Acc\_xS)/(n_{step} +1)$$

$$Sy = (Sy * n_{step} + Acc\_yS)/(n_{step} +1)$$

$$Sz = (Sz * n_{step} + Acc\_zS)/(n_{step} +1)$$

where

$$Acc\_xS = Acc\_x / sqrt(Acc\_x^2 + Acc\_y^2 + Acc\_z^2)$$

$$Acc\_yS = Acc\_y / sqrt(Acc\_x^2 + Acc\_y^2 + Acc\_z^2)$$

$$Acc\_zS = Acc\_z / sqrt(Acc\_x^2 + Acc\_y^2 + Acc\_z^2)$$

and the values of the gravity acceleration contributions such as:

$$Gx = (Gx * n_{step} + Acc\_x)/(n_{step} +1)$$

$$G_Y = (G_Y * n_{step} + Acc\_y)/(n_{step} + 1)$$

$$G_Z = (G_Z * n_{step} + Acc\_z)/(n_{step} + 1)$$

In the dynamic condition of a vehicle subject to linear accelerations, in step 42 the processing unit updates the elements of the first column of the conversion matrix *Lx, Ly, Lz* as a function of the mean values of the real measurement data *Acc_x, Acc_y, Acc_z* of the accelerometer device, and the calculated gravity contributions according to the relationships:

$$Lx = (Lx * n_{step} + Acc\_xL)/(n_{step} + 1)$$

$$Ly = (Ly * n_{step} + Acc\_yL)/(n_{step} + 1)$$

$$Lz = (Lz * n_{step} + Acc\_zL)/(n_{step} + 1)$$

where

$$Acc\_xL = (Acc\_xl/sqrt(Acc\_xl^2 + Acc\_yl^2 + Acc\_zl^2)) * sign\ (GPS\_Acc)$$

$$Acc\_yL = (Acc\_yl/sqrt(Acc\_xl^2 + Acc\_yl^2 + Acc\_zl^2)) * sign\ (GPS\_Acc)$$

$$Acc\_zL = (Acc\_zl/sqrt(Acc\_xl^2 + Acc\_yl^2 + Acc\_zl^2)) * sign\ (GPS\_Acc)$$

and

$$Acc\_xl = Acc\_x - G_X$$

$$Acc\_yl = Acc\_y - G_Y$$

$$Acc\_zl = Acc\_z - G_Z$$

where *GPS_Acc* is the linear acceleration value derived from the GPS positioning data.

In the dynamic condition of a vehicle subject to centripetal accelerations, in step 43 the processing unit updates the elements of the second column of the conversion matrix *Cx, Cy, Cz* as a function of the mean values of the real measurement data *Acc_x, Acc_y, Acc_z* of the accelerometer device, and the calculated gravity contributions according to the relationships:

$$Cx = (Cx * n_{step} + Acc\_xC)/(n_{step} + 1)$$

$$Cy = (Cy * n_{step} + Acc\_yC)/(n_{step} + 1)$$

$$Cz = (Cz * n_{step} + Acc\_zC)/(n_{step} + 1)$$

where

$$Acc\_xC=(Acc\_xc/sqrt(Acc\_xc^2+Acc\_yc^2+Acc\_zc^2)) * sign\ (GPS\_Acc\_C)$$

$$Acc\_yC=(Acc\_yc/sqrt(Acc\_xc^2+Acc\_yc^2+Acc\_zc^2)) * sign\ (GPS\_Acc\_C)$$

$$Acc\_zC=(Acc\_ZC/sqrt(Acc\_xc^2+Acc\_yc^2+Acc\_zc^2)) * sign\ (GPS\_Acc\_C)$$

and

$$Acc\_xc = Acc\_x - G_X$$

$$Acc\_yc = Acc\_y - G_Y$$

$$Acc\_zc = Acc\_z - G_Z$$

where *GPS_Acc_C* is the centripetal acceleration value derived from the GPS positioning data.

The first step of the calibration method is considered adequately completed at step 50 when the number of samples considered for each dynamic condition is greater than a predetermined threshold value, for example 300, otherwise a new cycle of acquiring the positioning data, measuring the accelerometer data, synchronizing and calculating the matrix elements is iterated, starting from steps 11 and 12.

The conversion matrix R obtained at the end of this first step of the calibration method on the basis of the acquired data is a real conversion matrix, the elements of which are affected by measurement errors, so that it does not respect the orthogonality requirement of the row and of the column vectors. Advantageously, then, the second step of the calibration method is performed, wherein the conversion matrix is subjected to orthogonalization in step 60, i.e. the orthogonal rotation matrix closest to the conversion matrix is calculated through the measurements.

Briefly, an orthogonal matrix is defined as a matrix whose transpose is equal to the inverse ($Q^TQ = QQ^T = I$ or in alternative notation $Q^T = Q^{-1}$). An additional constraint for the rotation matrix is that the determinant is equal to one: Det(Q)=1.

In order to determine the orthogonal rotation matrix Ro closest to the calculated real conversion matrix R, the following formula is applied:

$$Ro = R\ (R^TR)^{(-1/2)}$$

Appropriately, since the calculation of the orthogonal matrix is a very heavy task in computational terms for the processing unit E, it may not be performed at each occasion of periodic updating of the conversion matrix, but only periodically, for example every 150 updates.

With the calculation of the orthogonal rotation matrix, the calibration method ends, and the matrix is saved in the non-volatile memory M2.

The described calibration method may be performed only once when the vehicle is started or when the driver assistance system is activated, which integrates the accelerometric measurements, or may be performed cyclically after the vehicle is started or after the driving assistance system has been activated.

Advantageously, as will be understood from the reading of the preceding description, the calibration method leads to the generation of a coordinate transformation matrix between the local reference system of the sensor device (i.e., the apparatus installed on board, for example, the telematics unit T) and the vehicle reference system.

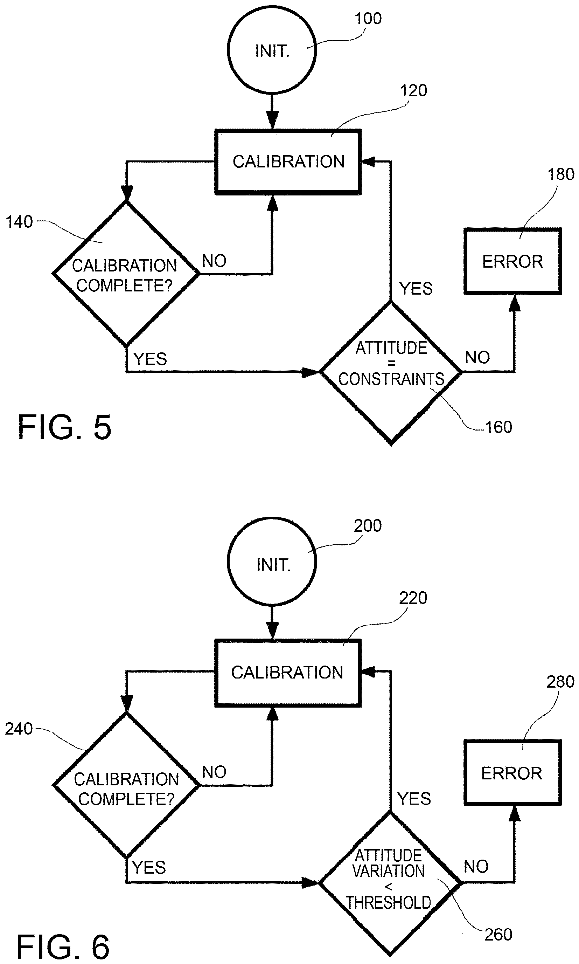

Hereinafter, and with reference to the flow charts of figures 5, 6 and 7, a method is described for detecting an installation of the telematics unit for which a specific orientation in the vehicle is prescribed. It, too, is carried out by the processing unit E.

The known calibration method allows the orientation of the telematics unit T as a whole to be determined with respect to the vehicle reference system.

The compatibility of the orientation of the unit T is verified according to a predetermined time frame for example according to a predetermined regular timing or depending on the activation of a driver assistance system which makes use of the unit T for comparison with predetermined requirements of installation or attitude constraints, expressed, for example, as permissible angular intervals of rotation of the axes of the telematics unit with respect to the X, Y, Z axes of the vehicle, i.e. as permissible angular intervals for the values of the angles $\alpha$, $\beta$, $\gamma$ represented in figure 3. The permissible angular intervals are defined by respective angular mounting thresholds, depending on the specific application of the installed apparatus.

If the orientation thus determined is not compatible with the installation instructions for correct operation of the telematics unit, an incorrect installation condition is detected.

In such case, the telematics unit is arranged to generate and transmit a predetermined warning message, for example to a remote management system, to alert the driver of the vehicle through a means available in the human-machine interface (if available), to save a recording of the event in the non-volatile memory M2.

In the case of installation of other units, different from the telematics unit described by way of example, the behavior of the apparatus in response to the incorrect installation condition may be different, depending on the application for which said apparatus is provided.

Since aftermarket installations of apparatuses relate to different types of vehicles, the permissible misalignment thresholds must be accurately predetermined to avoid false detection.

Examples of installation requirements according to the intended location of the telematics unit are presented below.

In the case of installation near the windshield, the following constraints are provided by way of example:

$\beta$ between 10° (very inclined windshield) and 90° (vertical windshield)
$\gamma$ no requirements
$\alpha$ between 80° and 110° (to take into account the curvature of the windshield)

with tolerance and margin of error in self-calibration of:
+/-25° on the angle $\beta$, +/-15° on the angle $\alpha$.

An error in the orientation of installation is therefore determined

if $\beta < -15°$ or $\beta > 115°$
if $\alpha < 65°$ or $\alpha > 125°$

In the case of horizontal installation, for example in the engine compartment, the following constraints are provided by way of example:

$\beta = 180°$
$\gamma$ and $\alpha$ between 0° and 360°, i.e. no constraints.

with tolerance and margin of error in self-calibration of:

+/- 40° on the angle $\beta$
whereby an error in the orientation of installation is determined
if $\beta < 140°$ or $\beta > 220°$

The method for verifying the correct installation of an apparatus may be carried out once the apparatus has been installed and/or periodically during the working life of the apparatus, for example when the vehicle is started or when the driving assistance system for which the apparatus is configured is activated. A periodic verification is advantageous as it allows for the failure of the conditions of correct installation to be detected in the moments following the mounting operation of the apparatus on the vehicle, for example, caused by uncontrolled changes in the attitude of the apparatus due to sudden and unexpected movements consequent to maneuvers of the vehicle being driven, which may occur if the apparatus has not been firmly installed in its intended seat.

This method is illustrated in the flowcharts of figures 5 to 7, respectively with reference to attitude errors in the first installation and to long-term attitude changes and to short-term attitude changes.

The audit of the attitude errors in the first installation serves to verify that the installation complies with the constraints imposed by the manufacturer, while the audit of the changes in long-term and short-term attitude are necessary to test if the installation is robust.

The audit of the attitude errors in the first installation and the audit of the long-term attitude changes apply at the end of the self-calibration method while the audit of the short-term attitude changes is carried out during the updating phase of the elements of the matrix.

The block diagram of figure 5 shows the steps of the method with audit of the setup errors in the first installation according to a first predetermined comparison time frame.

After the initialization of the system at step 100, the execution of a known process of self-calibration in step 120 allows the attitude data of the apparatus to be derived with respect to the vehicle, i.e., the orientation of the Cartesian axes of the reference system of the apparatus with respect to the Cartesian axes of the vehicle reference system, represented by angles $\alpha$, $\beta$ and $\gamma$.

A self-calibration cycle is controlled by step 140, where the completion of the method is verified. In the negative case, that is, if a self-calibration process has not yet finished or is incomplete, the method returns to step 120. Otherwise, it proceeds to the next step 160 where it is verified whether the attitude determined by the self-calibration is compatible with the predetermined attitude constraints.

In the positive case, the method again invokes the self-calibration process at step 120 according to said first predetermined time frame, otherwise, it signals an error in the installation of the apparatus at step 180.

The block diagram of figure 6 shows the steps of the method with auditing of the long-term attitude changes. Such changes in attitude may occur if the apparatus is not correctly secured and changes its position following a sporadic event. A verification of the changes in long-term attitude is conducted on the basis of a second predetermined comparison time frame, more frequent than said first comparison time frame.

After the initialization of the system at step 200, the execution of a known process of self-calibration in step 220 allows the attitude data of the apparatus to be derived with respect to the vehicle, i.e. the orientation of the Cartesian axes of the reference system of the apparatus with respect to the Cartesian axes of the vehicle reference system, represented by angles $\alpha$, $\beta$ and $\gamma$.

A self-calibration cycle is audited by step 240, where the completion of the method is verified. In the negative, that is, if a self-calibration process is not yet finished or is finished but is incomplete, the method returns to step 220. Otherwise, it proceeds to the next step 260 where it is verified whether the attitude determined by the self-calibration (at the i-th self-calibration cycle) has changed with respect to the attitude determined at a previous sampling (for example, to the (i-1)-th self-calibration cycle) and in this case if the magnitude of the variations (along the three axes) is greater or less than a set of respective predetermined tolerated variation thresholds.

More specifically, at the i-th self-calibration cycle the values of the angles $\alpha(i)$, $\beta(i)$, $\gamma(i)$ are detected and compared respectively to the values of the angles $\alpha(i-1)$, $\beta(i-1)$, $\gamma(i-1)$ detected in the (i-1)-th self-calibration cycle, and the difference is compared with respective predetermined variation thresholds. Furthermore, the variation of the sum of the three variations between the (i-1)-th cycle and the (i)-th cycle is checked, and the difference is compared with a predetermined overall variation threshold.

In the positive case, that is, in the case wherein it is determined that the variation of the attitude is contained within the predetermined thresholds, the method again invokes the self-calibration process at step 220 (self-calibration cycles) based on said second predetermined time frame. If at least one of the difference values between $\alpha(i)$ and $\alpha(i-1)$, $\beta(i)$ and $\beta(i-1)$, $\gamma(i)$ and $\gamma(i-1)$ in the module is higher than the respective threshold, an anomaly is detected in the apparatus attitude and therefore an installation error. In the same way, if the sum of the individual variations is greater than the respective threshold, an anomaly is detected in the attitude of the apparatus and therefore an installation error. An error in the installation of the apparatus is then signaled in step 280.

Advantageously, by carrying out a self-calibration process at successive moments in time, if the variation of the results is greater than a predetermined threshold of variation of attitude, an incorrect installation is determined, since a loose installation condition is recognized.

In this case, with respect to the comparison made by the method described with reference to figure 5, the detection of the condition of correct installation does not depend on the observation of absolute values, but of differential values over time. To allow this type of verification, the self-calibration process and the method object of the invention must be permanently enabled when the apparatus is in operation, so as to prevent an ineffective or even improper operation of the apparatus in the event of an alteration of relevant attitude, considered unacceptable.

It should be noted that, for the sake of brevity and simplicity of representation, the diagram of figure 6 does not show the storage of the attitude data, i.e. the calibration values obtained from the self-calibration process, and must be considered additional to a first initial calibration step described with reference to figure 4 (that is, when previous attitude values are not yet available).

The attitude variation thresholds are dependent on the application assigned to the apparatus, i.e. these thresholds may be varied according to the current applications of the apparatus, for example, if the telematics unit is not used to control the dynamics (roll, pitch, yaw) but only for GPS positioning then the relative thresholds may be different from the case wherein all the applications are active.

By way of example, a preferable attitude variation threshold is equal to 20° for angles $\alpha$, $\beta$ and $\gamma$ and of 40° for the sum of the angles, i.e. the conditions $\Delta\alpha < 20°$, $\Delta\beta < 20°$ e $\Delta\gamma < 20°$ e $\Delta(\text{sum}) < 40°$.

However, different attitude variation thresholds may be provided for each angle, specific to the application assigned to the apparatus.

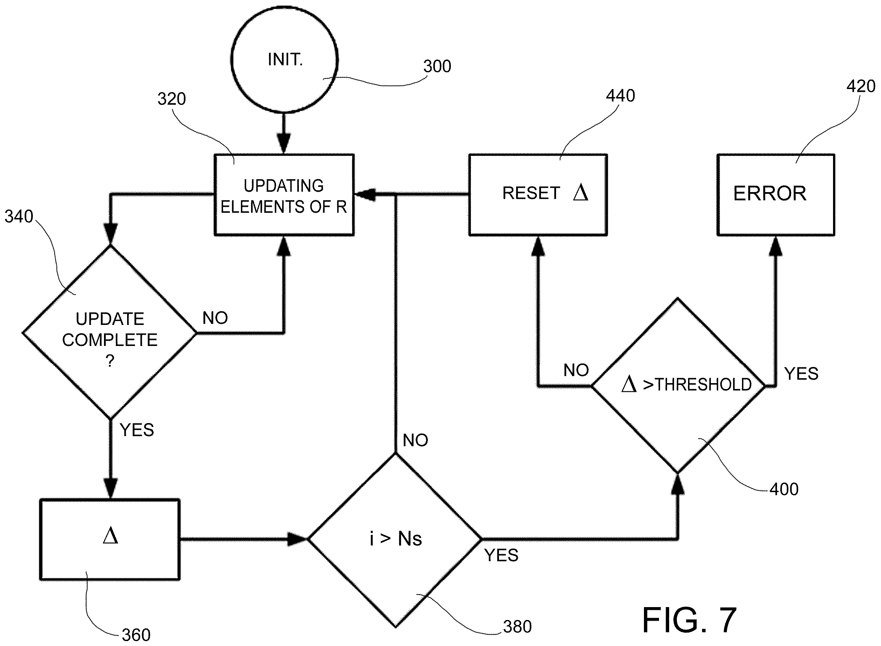

The block diagram of figure 7 shows the steps of the method with auditing of the short-term attitude changes. Such changes in attitude may occur if the apparatus is not fixed correctly and changes its position continuously during driving, for example over a period on the order of seconds or tens of seconds. A verification of the short-term changes in attitude is conducted on the basis of a third predetermined comparison time frame, more frequent than both of the previous comparison time frame.

As is known from EP 2 469 229 and has been described previously, the intermediate result of a self-calibration method (at the end of the first update step of the conversion matrix elements) is a 3x3 transformation matrix, the values of which are updated "by column", each column representing a calibration angle in three-dimensional space. Each column is updated according to the dynamic conditions of the vehicle. The update method of the conversion matrix elements independently generates new values in each column if the calibration conditions are met.

If the apparatus is permanently installed on board the vehicle, the intermediate values generated by the first phase of the self-calibration process show slight variations compared to the case wherein the apparatus is installed in a loose condition, so that it may oscillate while the vehicle is moving.

During the oscillations a variation of the elements of the conversion matrix is generated, ancillary to the normal variations determined by the measurement process.

By verifying the total variation of the elements of the conversion matrix on a predefined time interval defined by a predetermined number of updating cycles of the elements of the conversion matrix, and comparing these values with a predetermined threshold, it is possible to discriminate a correct installation (i.e. fixed mounting, integral with the vehicle) from a wrong or abnormal installation (i.e. a mounting of the apparatus that allows it to oscillate).

In the transformation matrix, each column is verified independently of the others and after a predetermined number of update cycles of the elements of the conversion matrix the total variation in the column values is compared with a predetermined, configurable and different threshold for each column.

After the initialization of the system at step 300, the execution of the first step of a known self-calibration process at step 320 allows all the elements of the conversion matrix to be obtained which, if orthogonalized, would allow the configuration data of the apparatus to be derived with respect to the vehicle, i.e. the orientation of the Cartesian axes of the reference system of the apparatus with respect to the Cartesian axes of the vehicle reference system, represented by the angles $\alpha$, $\beta$ and $\gamma$.

The update of all the elements of the matrix is controlled by step 340. In the negative case, i.e. if not all elements of the matrix have been updated, the method returns to step 320. Otherwise, it proceeds to the next step 360 where the global variation of the various elements of the matrix is calculated.

The global variation of the calibration parameters, $\Delta$, may be defined as:

$$\Delta = \sum_{i}^{Ns} \left( \left| a_{1n}(i) - a_{1n}(i-1) \right| + \left| a_{2n}(i) - a_{2n}(i-1) \right| + \left| a_{3n}(i) - a_{3n}(i-1) \right| \right)$$

wherein:

"a" are the values of the transformation matrix;
"n" is equal to 1, 2, 3 and indicates the number of the column;
"Ns" indicates the total number of samples used for the evaluation of each overall variation of the values of the columns of the transformation matrix, and depends on the application, a number equal to or greater than 200 being preferable; and
"i" defines the individual iterations of the calculation.

Each iteration of the calculation is updated whenever a column of the matrix is updated.

At step 380 the number of iterations of the calculation is verified and if these are not yet sufficient, the method returns to step 320.

When the number of iterations reaches the predetermined value Ns, the total variation value is compared with the threshold set in step 400 and an installation error is indicated in step 420 if the total variation value is greater than said threshold. Otherwise, the total variation value is reset at step 440 and the method returns to step 320 based on said third predetermined time frame.

Naturally, without altering the principle of the invention, the embodiments and the details of implementation may vary widely with respect to that which is described and illustrated purely by way of non-limiting example, without thereby departing from the scope of protection of the invention defined by the appended claims.

**Claims**

1. Method of verification of the installation of an apparatus (T) mounted on board a vehicle (V), said apparatus (T) being equipped with an inertial sensor device (S), wherein the method includes:

   an iterated determination of the attitude of said apparatus (T) with respect to a vehicle reference coordinates system (X, Y, Z) by means of a plurality of calibration cycles, wherein each calibration cycle comprises the steps of:

   - acquiring (11), through said inertial sensor device (S), at determined measurement instants, real measurement data indicative of the dynamics of the vehicle (V) in a local coordinate system (x, y, z);
   - acquiring (11), by means of calibration detector means (G) different from said inertial sensor device (S), at sampling instants coincident with said measurement instants, reference measurement data indicative of the dynamics of the vehicle (V) in a vehicle coordinate system (X, Y, Z);
   - generating a coordinates transformation matrix (R), adapted to put in relation the quantities measured in the local coordinate system (x, y, z) with corresponding quantities in the vehicle coordinate system (X, Y, Z); and
   - updating the elements of the coordinates transformation matrix (R) for a predetermined number of times and subsequently orthogonalizing the coordinates transformation matrix (R),

   wherein all the elements of the coordinates transformation matrix (R) are calculated by comparison (41, 42, 43) between a plurality of measurement data acquired by the inertial sensor device (S) and a corresponding plurality of reference measurement data obtained in a plurality of different driving conditions, and
   wherein the plurality of measurement data comprises a number of data equal to the number of elements of the coordinates transformation matrix (R);
   a first comparison (160) of the determined attitude of said apparatus (T) with predetermined attitude constraints, according to a first predetermined comparison time frame;
   a second comparison (260) of the determined attitude of said apparatus (T) at a calibration cycle with at least one determined attitude of said apparatus (T) at a previous calibration cycle based on at least a second predetermined comparison time frame, more frequent than said first comparison time frame; and
   a third comparison (400) of the change in the value of the elements of the coordinates transformation matrix (R) between an updating cycle of the value of the elements of the coordinates transformation matrix (R) and an updating cycle of the value of the elements of the previous coordinates transformation matrix (R) based on a third predetermined comparison time frame, more frequent than said first and said second comparison time frame, extended over a predefined time interval comprising a predetermined number of cycles of updating the value of the elements of the transformation matrix (R), with a predetermined threshold.

2. Method according to claim 1, wherein the second comparison of the determined attitude of said apparatus (T) with at least one preceding attitude of said apparatus (T) includes the comparison (260) of the attitude variation between a first position detected at a current instant of time and a second position detected in at least a previous instant of time along each axis of the local reference coordinates system (x, y, z), with respective predetermined variation thresholds.

3. Method according to claim 1 or 2, wherein the comparison of an attitude of said apparatus (T) with at least one preceding attitude of said apparatus (T) includes the comparison (260) of the sum of the attitude variations between a first position detected at a current instant of time and a second position detected in at least a preceding instant of time along each axis of the local reference coordinate system (x, y, z), with a predetermined overall variation threshold.

4. Method according to claim 1, wherein the third comparison (400) consists in comparing an overall variation in the value of the elements of each column of the coordinates transformation matrix (R) between an updating cycle of the values of the elements of the coordinates transformation matrix (R), and an updating cycle of the values of the elements of the previous coordinates transformation matrix (R) extended on a predetermined time interval comprising a predetermined number of updating cycles of the value of the elements of the transformation matrix (R), with a predetermined threshold corresponding to the respective column, according to the expression:

$$\Delta = \sum_{i}^{N_s} \left( \left| a_{1n}(i) - a_{1n}(i-1) \right| + \left| a_{2n}(i) - a_{2n}(i-1) \right| + \left| a_{3n}(i) - a_{3n}(i-1) \right| \right)$$

wherein:

$\Delta$ is the overall change in the value of the column elements of the coordinates transformation matrix (R);
a are the values of the individual elements of the coordinates transformation matrix (R);
n = 1, 2, 3 indicates the number of column of the coordinates transformation matrix (R); and
"Ns" indicates the total number of calibration cycles.

5. Method according to any one of the preceding claims, wherein orthogonalizing the coordinates transformation matrix (R) includes the modification of the value of each element of the coordinates transformation matrix (R) by means of the imposition of an orthogonality constraint (60), obtaining the orthogonal transformation matrix (Ro) nearest to the coordinates transformation matrix (R) obtained on the basis of the measurement data.

6. Method according to claim 5, wherein said calibration detectors means comprise a satellite positioning system (G) or integrated odometric sensors on board the vehicle (V).

7. Method according to any one of claims 4, 5 or 6, wherein the updating cycles are at periodic intervals and the orthogonalization of the coordinates transformation matrix (R) is calculated after a predetermined number of updating cycles.

8. Method according to claim 5, wherein the measurement data indicative of the dynamics of the vehicle are linear and centripetal acceleration data detected in the dynamics conditions when: the vehicle is stationary or in constant and uniform motion; the vehicle is in linear acceleration or deceleration; the vehicle is changing direction of travel at a constant speed.

9. Verification system of the installation of an apparatus (T) mounted on board a vehicle (V), said apparatus (T) being equipped with an inertial sensor device (S), **characterized in that** said apparatus includes processing means (E) forming said verification system and arranged for
an iterated determination of the attitude of said apparatus (T) relative to a vehicle reference coordinate system (X, Y, Z) by means of a plurality of calibration cycles, wherein each calibration cycle comprises the steps of:

- acquiring (11), through said inertial sensor device (S), at determined measurement instants, real measurement data indicative of the dynamics of the vehicle (V) in a local coordinate system (x, y, z);
- acquiring (11), by means of calibration detector means (G) different from said inertial sensor device (S), at sampling instants coincident with said measurement instants, reference measurement data indicative of the dynamics of the vehicle (V) in a vehicle coordinate system (X, Y, Z);
- generating a coordinates transformation matrix (R), adapted to put in relation the quantities measured in the local coordinate system (x, y, z) with corresponding quantities in the vehicle coordinate system (X, Y, Z); and
- updating the elements of the coordinates transformation matrix (R) for a predetermined number of times and subsequently orthogonalizing the coordinates transformation matrix (R),

wherein all the elements of the coordinates transformation matrix (R) are calculated by comparison (41, 42, 43) between a plurality of measurement data acquired by the inertial sensor device (S) and a corresponding plurality of reference measurement data obtained in a plurality of different driving conditions, and
wherein the plurality of measurement data comprises a number of data equal to the number of elements of the coordinates transformation matrix (R);
a first comparison (160) of the determined attitude of said apparatus (T) with predetermined attitude constraints, according to a first predetermined comparison time frame;
a second comparison (260) of the determined attitude of said apparatus (T) at a calibration cycle with at least one determined attitude of said apparatus (T) at a previous calibration cycle based on at least a second predetermined comparison time frame, more frequent than said first comparison time frame; and
a third comparison (400) of the change in the value of the elements of the coordinates transformation matrix (R) between an updating cycle of the value of the elements of the coordinates transformation matrix (R) and an updating cycle of the value of the elements of the previous coordinates transformation matrix (R) based on a third predetermined comparison time frame, more frequent than said first and said second comparison time frame, extended over a predefined time interval comprising a predetermined number of cycles of updating the value of the elements of the transformation matrix (R), with a predetermined threshold.

10. System according to claim 9, arranged for the implementation of a method of verification of the installation of an apparatus (T) according to any one of claims 2 to 8.

**Patentansprüche**

1. Verfahren zur Überprüfung der Installation einer Vorrichtung (T), die an Bord eines Fahrzeugs (V) montiert ist, wobei die Vorrichtung (T) mit einem Trägheitssensorgerät (S) ausgestattet ist, wobei das Verfahren umfasst:

   eine iterative Bestimmung der Lage der Vorrichtung (T) in Bezug auf ein Fahrzeug-Referenzkoordinatensystem (X, Y, Z) mittels einer Vielzahl von Kalibrierzyklen, wobei jeder Kalibrierzyklus die folgenden Schritte umfasst:

   - Erfassen (11), durch das Trägheitssensorgerät (S), von realen Messdaten, die die Dynamik des Fahrzeugs (V) in einem lokalen Koordinatensystem (x, y, z) angeben, zu bestimmten Messzeitpunkten;
   - Erfassen (11) von Referenzmessdaten, die die Dynamik des Fahrzeugs (V) in einem Fahrzeugkoordinatensystem (X, Y, Z) angeben, mittels Kalibrierungsdetektormitteln (G), die sich von dem Trägheitssensorgerät (S) unterscheiden, zu Abtastzeitpunkten, die mit den Messzeitpunkten zusammenfallen;
   - Erzeugen einer Koordinatentransformationsmatrix (R), die ausgebildet ist, die in dem lokalen Koordinatensystem (x, y, z) gemessenen Größen mit entsprechenden Größen in dem Fahrzeugkoordinatensystem (X, Y, Z) in Beziehung zu setzen; und
   - Aktualisierung der Elemente der Koordinatentransformationsmatrix (R) für eine vorbestimmte Anzahl von Malen und anschließende Orthogonalisierung der Koordinatentransformationsmatrix (R),

   wobei alle Elemente der Koordinatentransformationsmatrix (R) durch Vergleich (41, 42, 43) zwischen einer Vielzahl von Messdaten, die durch das Trägheitssensorgerät (S) erfasst wurden, und einer entsprechenden Vielzahl von Referenzmessdaten berechnet werden, die in einer Vielzahl von unterschiedlichen Fahrbedingungen erhalten wurden, und
   wobei die Vielzahl von Messdaten eine Anzahl von Daten umfasst, die gleich der Anzahl von Elementen der Koordinatentransformationsmatrix (R) ist;
   einen ersten Vergleich (160) der bestimmten Lage der Vorrichtung (T) mit vorbestimmten Lageeinschränkungen gemäß einem ersten vorbestimmten Vergleichszeitrahmen ;
   einen zweiten Vergleich (260) der bestimmten Lage der Vorrichtung (T) in einem Kalibrierzyklus mit mindestens einer bestimmten Lage der Vorrichtung (T) in einem vorhergehenden Kalibrierzyklus auf der Grundlage mindestens eines zweiten vorbestimmten Vergleichszeitrahmens, der häufiger ist als der erste Vergleichszeitrahmen; und
   einen dritten Vergleich (400) der Änderung des Wertes der Elemente der Koordinatentransformationsmatrix (R) zwischen einem Aktualisierungszyklus des Wertes der Elemente der Koordinatentransformationsmatrix (R) und einem Aktualisierungszyklus des Wertes der Elemente der vorhergehenden Koordinatentransformationsmatrix (R) auf der Grundlage eines dritten vorbestimmten Vergleichszeitrahmens, der häufiger als der erste und der zweite Vergleichszeitrahmen ist und sich über ein vordefiniertes Zeitintervall erstreckt, das eine vorbestimmte Anzahl von Zyklen einer Aktualisierung des Wertes der Elemente der Transformationsmatrix (R) umfasst, mit einem vorbestimmten Schwellenwert.

2. Verfahren nach Anspruch 1, wobei der zweite Vergleich der bestimmten Lage der Vorrichtung (T) mit mindestens einer vorhergehenden Lage der Vorrichtung (T) den Vergleich (260) der Lageänderung zwischen einer ersten Position, die zu einem aktuellen Zeitpunkt erfasst wurde, und einer zweiten Position, die in mindestens einem vorhergehenden Zeitpunkt erfasst wurde, entlang jeder Achse des lokalen Referenzkoordinatensystems (x, y, z) mit entsprechenden vorbestimmten Änderungsschwellenwerten umfasst.

3. Verfahren nach Anspruch 1 oder 2, wobei der Vergleich einer Lage der Vorrichtung (T) mit mindestens einer vorhergehenden Lage der Vorrichtung (T) den Vergleich (260) der Summe der Lageänderungen zwischen einer ersten Position, die zu einem aktuellen Zeitpunkt erfasst wurde, und einer zweiten Position, die in mindestens einem vorhergehenden Zeitpunkt erfasst wurde, entlang jeder Achse des lokalen Referenzkoordinatensystems (x, y, z) mit einem vorbestimmten Gesamtänderungsschwellenwert umfasst.

4. Verfahren nach Anspruch 1, wobei der dritte Vergleich (400) darin besteht, eine Gesamtveränderung des Wertes der Elemente jeder Spalte der Koordinatentransformationsmatrix (R) zwischen einem Aktualisierungszyklus der Werte der Elemente der Koordinatentransformationsmatrix (R) und einem Aktualisierungszyklus der Werte der Elemente der vorhergehenden Koordinatentransformationsmatrix (R), der sich über ein vorbestimmtes Zeitintervall erstreckt, das eine vorbestimmte Anzahl von Aktualisierungszyklen des Wertes der Elemente der Transformationsmatrix (R) umfasst, mit einem vorbestimmten Schwellenwert zu vergleichen, der der entsprechenden Spalte entspricht, gemäß der Gleichung:

$$\Delta = \sum_{i}^{Ns} \left( \left| a_{1n}(i) - a_{1n}(i-1) \right| + \left| a_{2n}(i) - a_{2n}(i-1) \right| + \left| a_{3n}(i) - a_{3n}(i-1) \right| \right)$$

wobei:

$\Delta$ die Gesamtänderung des Wertes der Spaltenelemente der Koordinatentransformationsmatrix (R) ist;
a die Werte der einzelnen Elemente der Koordinatentransformationsmatrix (R) sind;
n = 1, 2, 3 die Nummer der Spalte der Koordinatentransformationsmatrix (R) angibt; und
"Ns" die Gesamtzahl der Kalibrierzyklen angibt.

5. Verfahren nach einem der vorstehenden Ansprüche, wobei die Orthogonalisierung der Koordinatentransformationsmatrix (R) die Änderung des Wertes jedes Elements der Koordinatentransformationsmatrix (R) durch Auferlegung einer Orthogonalitätsbedingung (60) umfasst, wobei die orthogonale Transformationsmatrix (Ro), die der auf der Grundlage der Messdaten erhaltenen Koordinatentransformationsmatrix (R) am nächsten liegt, erhalten wird.

6. Verfahren nach Anspruch 5, wobei die Kalibrierungsdetektormittel ein Satellitenpositionierungssystem (G) oder integrierte odometrische Sensoren an Bord des Fahrzeugs (V) umfassen.

7. Verfahren nach einem der Ansprüche 4, 5 oder 6, wobei die Aktualisierungszyklen in periodischen Intervallen erfolgen und die Orthogonalisierung der Koordinatentransformationsmatrix (R) nach einer vorbestimmten Anzahl von Aktualisierungszyklen berechnet wird.

8. Verfahren nach Anspruch 5, wobei die Messdaten, die die Dynamik des Fahrzeugs angeben, lineare und zentripetale Beschleunigungsdaten sind, die unter den Dynamikbedingungen erfasst wurden, wenn: das Fahrzeug stillsteht oder sich in konstanter und gleichförmiger Bewegung befindet; das Fahrzeug sich in linearer Beschleunigung oder Verzögerung befindet; das Fahrzeug die Fahrtrichtung mit konstanter Geschwindigkeit ändert.

9. System zur Überprüfung der Installation einer Vorrichtung (T), die an Bord eines Fahrzeugs (V) montiert ist, wobei die Vorrichtung (T) mit einem Trägheitssensorgerät (S) ausgestattet ist, **dadurch gekennzeichnet, dass** die Vorrichtung Verarbeitungsmittel (E) umfasst, die das System zur Überprüfung bilden und ausgebildet sind für eine iterative Bestimmung der Lage der Vorrichtung (T) in Bezug auf ein Fahrzeug-Referenzkoordinatensystem (X, Y, Z) mittels einer Vielzahl von Kalibrierzyklen, wobei jeder Kalibrierzyklus die folgenden Schritte umfasst:

- Erfassen (11), durch das Trägheitssensorgerät (S), von realen Messdaten, die die Dynamik des Fahrzeugs (V) in einem lokalen Koordinatensystem (x, y, z) angeben, zu bestimmten Messzeitpunkten;
- Erfassen (11) von Referenzmessdaten, die die Dynamik des Fahrzeugs (V) in einem Fahrzeugkoordinatensystem (X, Y, Z) angeben, mittels Kalibrierungsdetektormitteln (G), die sich von dem Trägheitssensorgerät (S) unterscheiden, zu Abtastzeitpunkten, die mit den Messzeitpunkten zusammenfallen;
- Erzeugen einer Koordinatentransformationsmatrix (R), die ausgebildet ist, die in dem lokalen Koordinatensystem (x, y, z) gemessenen Größen mit entsprechenden Größen in dem Fahrzeugkoordinatensystem (X, Y, Z) in Beziehung zu setzen; und
- Aktualisierung der Elemente der Koordinatentransformationsmatrix (R) für eine vorbestimmte Anzahl von Malen und anschließende Orthogonalisierung der Koordinatentransformationsmatrix (R),

wobei alle Elemente der Koordinatentransformationsmatrix (R) durch Vergleich (41, 42, 43) zwischen einer Vielzahl von Messdaten, die durch das Trägheitssensorgerät (S) erfasst wurden, und einer entsprechenden Vielzahl von Referenzmessdaten berechnet werden, die in einer Vielzahl von unterschiedlichen Fahrbedingungen erhalten wurden, und
wobei die Vielzahl von Messdaten eine Anzahl von Daten umfasst, die gleich der Anzahl von Elementen der Koordinatentransformationsmatrix (R) ist;
einen ersten Vergleich (160) der bestimmten Lage der Vorrichtung (T) mit vorbestimmten Lageeinschränkungen gemäß einem ersten vorbestimmten Vergleichszeitrahmen ;
einen zweiten Vergleich (260) der bestimmten Lage der Vorrichtung (T) in einem Kalibrierzyklus mit mindestens einer bestimmten Lage der Vorrichtung (T) in einem vorhergehenden Kalibrierzyklus auf der Grundlage mindestens eines zweiten vorbestimmten Vergleichszeitrahmens, der häufiger ist als der erste Vergleichszeitrahmen; und einen dritten Vergleich (400) der Änderung des Wertes der Elemente der Koordinatentransformationsmatrix (R) zwischen einem Aktualisierungszyklus des Wertes der Elemente der Koordinatentransformationsmatrix (R) und einem Aktualisierungszyklus des Wertes der Elemente der vorhergehenden Koordinatentransformationsmatrix (R) auf der Grundlage eines dritten vorbestimmten Vergleichszeitrahmens, der häufiger als der erste und der zweite Vergleichszeitrahmen ist und sich über ein vordefiniertes Zeitintervall erstreckt, das eine vorbestimmte Anzahl von Zyklen einer Aktualisierung des Wertes der Elemente der Transformationsmatrix (R) umfasst, mit einem vorbestimmten Schwellenwert.

10. System nach Anspruch 9, ausgebildet für die Durchführung eines Verfahrens zur Überprüfung der Installation einer Vorrichtung (T) nach einem der Ansprüche 2 bis 8.

## Revendications

1. Procédé de vérification de l'installation d'un appareil (T) monté à bord d'un véhicule (V), ledit appareil (T) étant équipé d'un dispositif de capteur inertiel (S), dans lequel le procédé inclut :
une détermination itérée de l'attitude dudit appareil (T) par rapport à un système de coordonnées de référence de véhicule (X, Y, Z) au moyen d'une pluralité de cycles d'étalonnage, dans lequel chaque cycle d'étalonnage comprend les étapes de :

- l'acquisition (11), au travers dudit dispositif de capteur inertiel (S), à des instants de mesure déterminés, de données de mesure réelles indicatives de la dynamique du véhicule (V) dans un système de coordonnées locales (x, y, z) ;
- l'acquisition (11), au moyen de moyens détecteurs d'étalonnage (G) différents dudit dispositif de capteur inertiel (S), à des instants d'échantillonnage coïncidant avec lesdits instants de mesure, de données de mesure de référence indicatives de la dynamique du véhicule (V) dans un système de coordonnées de véhicule (X, Y, Z) ;
- la génération d'une matrice de transformation de coordonnées (R), adaptée pour mettre en relation les quantités mesurées dans le système de coordonnées locales (x, y, z) avec les quantités correspondantes dans le système de coordonnées de véhicule (X, Y, Z) ; et
- la mise à jour des éléments de la matrice de transformation de coordonnées (R) un nombre prédéterminé de fois, et l'orthogonalisation ultérieure de la matrice de transformation de coordonnées (R),

dans lequel tous les éléments de la matrice de transformation de coordonnées (R) sont calculés par une comparaison (41, 42, 43) entre une pluralité de données de mesure acquises par le dispositif de capteur inertiel (S) et une pluralité correspondante de données de mesure de référence obtenues dans une pluralité de conditions de conduite différentes, et
dans lequel la pluralité de données de mesure comprend un nombre de données égal au nombre d'éléments de la matrice de transformation de coordonnées (R) ;
une première comparaison (160) de l'attitude déterminée dudit appareil (T) avec des contraintes d'attitude prédéterminées, conformément à un premier délai de comparaison prédéterminé ;
une deuxième comparaison (260) de l'attitude déterminée dudit appareil (T) lors d'un cycle d'étalonnage avec au moins une attitude déterminée dudit appareil (T) lors d'un cycle d'étalonnage précédent sur la base d'au moins un deuxième délai de comparaison prédéterminé, plus fréquent que ledit premier délai de comparaison ; et
une troisième comparaison (400) du changement de la valeur des éléments de la matrice de transformation de coordonnées (R) entre un cycle de mise à jour de la valeur des éléments de la matrice de transformation de coordonnées (R) et un cycle de mise à jour de la valeur des éléments de la matrice de transformation de coordonnées (R) précédente sur la base d'un troisième délai de comparaison prédéterminé, plus fréquent que ledit premier et ledit second délai de comparaison, s'étendant sur un intervalle temporel prédéfini comprenant un nombre prédéterminé de cycles de mise à jour de la valeur des éléments de la matrice de transformation (R), avec un seuil prédéterminé.

2. Procédé selon la revendication 1, dans lequel la deuxième comparaison de l'attitude déterminée dudit appareil (T) avec au moins une attitude précédente dudit appareil (T) inclut la comparaison (260) de la variation d'attitude entre une première position détectée à un instant temporel actuel et une seconde position détectée pendant au moins un instant temporel antérieur le long de chaque axe du système de coordonnées de référence locales (x, y, z), avec des seuils de variation prédéterminés respectifs.

**3.** Procédé selon la revendication 1 ou 2, dans lequel la comparaison d'une attitude dudit appareil (T) avec au moins une attitude précédente dudit appareil (T) inclut la comparaison (260) de la somme des variations d'attitude entre une première position détectée à un instant temporel actuel et une seconde position détectée pendant au moins un instant temporel précédent le long de chaque axe du système de coordonnées de référence locales (x, y, z), avec un seuil de variation globale prédéterminé.

**4.** Procédé selon la revendication 1, dans lequel la troisième comparaison (400) consiste à comparer une variation globale de la valeur des éléments de chaque colonne de la matrice de transformation de coordonnées (R) entre un cycle de mise à jour des valeurs des éléments de la matrice de transformation de coordonnées (R) et un cycle de mise à jour des valeurs des éléments de la matrice de transformation de coordonnées (R) précédente s'étendant sur un intervalle temporel prédéterminé comprenant un nombre prédéterminé de cycles de mise à jour de la valeur des éléments de la matrice de transformation (R), avec un seuil prédéterminé correspondant à la colonne respective, selon l'expression :

$$\Delta = \sum_{i}^{Ns} \left( \left| a_{1n}(i) - a_{1n}(i-1) \right| + \left| a_{2n}(i) - a_{2n}(i-1) \right| + \left| a_{3n}(i) - a_{3n}(i-1) \right| \right)$$

dans lequel :

$\Delta$ est le changement global de la valeur des éléments de colonne de la matrice de transformation de coordonnées (R) ;
les a sont les valeurs des éléments individuels de la matrice de transformation de coordonnées (R) ;
n = 1, 2, 3 indique le numéro de colonne de la matrice de transformation de coordonnées (R) ; et
« Ns » indique le nombre total de cycles d'étalonnage.

**5.** Procédé selon l'une quelconque des revendications précédentes, dans lequel l'orthogonalisation de la matrice de transformation de coordonnées (R) inclut la modification de la valeur de chaque élément de la matrice de transformation de coordonnées (R) au moyen de l'imposition d'une contrainte d'orthogonalité (60), en obtenant la matrice de transformation orthogonale (Ro) la plus proche de la matrice de transformation de coordonnées (R) obtenue sur la base des données de mesure.

**6.** Procédé selon la revendication 5, dans lequel lesdits moyens détecteurs d'étalonnage comprennent un système de positionnement par satellite (G) ou des capteurs intégrés d'odométrie à bord du véhicule (V).

**7.** Procédé l'une quelconque des revendications 4, 5 ou 6, dans lequel les cycles de mise à jour sont à intervalles périodiques et l'orthogonalisation de la matrice de transformation de coordonnées (R) est calculée après un nombre prédéterminé de cycles de mise à jour.

**8.** Procédé selon la revendication 5, dans lequel les données de mesure indicatives de la dynamique du véhicule sont des données d'accélération linéaire et centripète détectées dans les conditions dynamiques lorsque : le véhicule est stationnaire ou en mouvement constant et uniforme ; le véhicule est en accélération ou décélération linéaire ; le véhicule change de direction de déplacement à une vitesse constante.

**9.** Système de vérification de l'installation d'un appareil (T) monté à bord d'un véhicule (V), ledit appareil (T) étant équipé d'un dispositif de capteur inertiel (S), **caractérisé en ce que** ledit appareil inclut des moyens de traitement (E) formant ledit système de vérification et agencés pour
une détermination itérée de l'attitude dudit appareil (T) relativement à un système de coordonnées de référence de véhicule (X, Y, Z) au moyen d'une pluralité de cycles d'étalonnage, dans lequel chaque cycle d'étalonnage comprend les étapes de :

- l'acquisition (11), au travers dudit dispositif de capteur inertiel (S), à des instants de mesure déterminés, de données de mesure réelles indicatives de la dynamique du véhicule (V) dans un système de coordonnées locales (x, y, z) ;
- l'acquisition (11), au moyen de moyens détecteurs d'étalonnage (G) différents dudit dispositif de capteur inertiel (S), à des instants d'échantillonnage coïncidant avec lesdits instants de mesure, de données de mesure de référence indicatives de la dynamique du véhicule (V) dans un système de coordonnées de véhicule (X, Y, Z) ;
- la génération d'une matrice de transformation de coordonnées (R), adaptée pour mettre en relation les quantités mesurées dans le système de coordonnées locales (x, y, z) avec les quantités correspondantes dans le système de coordonnées de véhicule (X, Y, Z) ; et

- la mise à jour des éléments de la matrice de transformation de coordonnées (R) un nombre prédéterminé de fois, et l'orthogonalisation ultérieure de la matrice de transformation de coordonnées (R),

dans lequel tous les éléments de la matrice de transformation de coordonnées (R) sont calculés par une comparaison (41, 42, 43) entre une pluralité de données de mesure acquises par le dispositif de capteur inertiel (S) et une pluralité correspondante de données de mesure de référence obtenues dans une pluralité de conditions de conduite différentes, et

dans lequel la pluralité de données de mesure comprend un nombre de données égal au nombre d'éléments de la matrice de transformation de coordonnées (R) ;

une première comparaison (160) de l'attitude déterminée dudit appareil (T) avec des contraintes d'attitude prédéterminées, conformément à un premier délai de comparaison prédéterminé ;

une deuxième comparaison (260) de l'attitude déterminée dudit appareil (T) lors d'un cycle d'étalonnage avec au moins une attitude déterminée dudit appareil (T) lors d'un cycle d'étalonnage précédent sur la base d'au moins un deuxième délai de comparaison prédéterminé, plus fréquent que ledit premier délai de comparaison ; et

une troisième comparaison (400) du changement de la valeur des éléments de la matrice de transformation de coordonnées (R) entre un cycle de mise à jour de la valeur des éléments de la matrice de transformation de coordonnées (R) et un cycle de mise à jour de la valeur des éléments de la matrice de transformation de coordonnées (R) précédente sur la base d'un troisième délai de comparaison prédéterminé, plus fréquent que ledit premier et ledit second délai de comparaison, s'étendant sur un intervalle temporel prédéfini comprenant un nombre prédéterminé de cycles de mise à jour de la valeur des éléments de la matrice de transformation (R), avec un seuil prédéterminé.

10. Système selon la revendication 9, agencé pour la mise en œuvre d'un procédé de vérification de l'installation d'un appareil (T) selon l'une quelconque des revendications 2 à 8.

FIG. 1

FIG. 2

FIG. 3

FIG. 4

FIG. 5

FIG. 6

FIG. 7

EP 3 336 488 B1

## REFERENCES CITED IN THE DESCRIPTION

**Patent documents cited in the description**

- EP 1443307 A
- EP 2469229 A